# EUROPEAN PATENT APPLICATION

(11) **EP 4 841 141 A1**
(43) Date of publication of application: **18.11.2026**
(21) Application number: 24916892.3
(22) Date of filing: 20.12.2024
(51) Int. Cl.: F16K 31/04, F16K 11/074, F16K 11/085

(54) **SELECTOR VALVE**

(30) Priority: 09.01.2024 JP 2024001287
(71) Applicant: Eagle Industry Co., Ltd., Minato-ku Tokyo 105-8587 (JP)
(72) Inventor: MATSUZAKI, Akitaka, Tokyo 105-8587 (JP); AKIYOSHI, Norimitsu, Tokyo 105-8587 (JP); KAWATO, Tadanobu, Tokyo 105-8587 (JP); KONDO, Shinji, Tokyo 105-8587 (JP); OGAWA, Noriyuki, Tokyo 105-8587 (JP)
(74) Representative: WSL Patentanwälte Partnerschaft mbB
(86) International application number: PCT/JP2024/045222
(87) International publication number: WO 2025/150390

(57) **Abstract**

A switching valve capable of accurately disposing a valve body at a rotation position is provided. An engaging device 3 is provided at a predetermined position between an outer peripheral portion 1A of a valve body 1 and an inner peripheral portion 5CA of a housing 50 for engagement therebetween.

## Description

### {TECHNICAL FIELD}

The present invention relates to a switching valve, for example, a switching valve that switches a flow path through which a fluid flows.

### {BACKGROUND ART}

In various industrial fields, fluid circuits are used in which a fluid supply source and a fluid load such as a fluid working device or a heat exchanger are connected by a flow path. Some of these fluid circuits are provided with a switching valve that switches the flow path of the working fluid, thereby realizing a plurality of modes for operating the fluid load using a single fluid circuit.

For example, a switching valve of Patent Citation 1 includes a valve casing having a first valve seat, a second valve seat, and a third valve seat, a main valve body rotatably disposed between the first valve seat and the second valve seat inside the valve casing, an auxiliary valve body rotatably disposed between the second valve seat and the third valve seat inside the valve casing, and a drive shaft driving the main valve body and the auxiliary valve body. The first valve seat is provided with a first port to a third port, and the second valve seat is provided with a first communication hole and a second communication hole.

The main valve body is switchable between a first communication position where the first port communicates with the second port and a second communication position where the first port communicates with the third port. Further, the auxiliary valve body is switchable between a blocking position and an opening position of the second communication hole. When the auxiliary valve body is located at the opening position, the first port to the third port communicate with each other through the first communication hole and the second communication hole. Accordingly, it is possible to switch between a first mode in which the main valve body is located at the first communication position and the auxiliary valve body is located at the blocking position, a second mode in which the main valve body is located at the second communication position and the auxiliary valve body is located at the blocking position, and a third mode in which the main valve body is located at the second communication position and the auxiliary valve body is located at the opening position.

### {CITATION LIST}

### {Patent Literature}

Patent Citation 1: JP 2015-218893 A (Page 13, FIG. 4)

### {SUMMARY OF INVENTION}

### {Technical Problem}

In the switching valve of Patent Citation 1, the main valve body can be accurately located at the communication position by controlling the rotation angle of the main valve body using a stepping motor. However, external factors such as vibrations may cause the main valve body to deviate from the appropriate communication position, and in this case, there is a risk that the main valve body may remain in a state where the main valve body is deviated from the appropriate communication position.

The present invention has been made in view of such problems and an object of the present invention is to provide a switching valve capable of accurately disposing a valve body at a rotation position.

### {Solution to Problem}

In order to solve the foregoing problem, a switching valve according to the present invention is a switching valve including: a housing; a valve body which is formed in a disk shape, which is disposed in a valve chamber formed inside the housing and which is configured to rotate relative to the housing; and a drive device connected to the valve body and configured to rotate the valve body, wherein the housing is provided with a plurality of ports that communicate with the valve chamber so that a fluid flow thereinto and therefrom, wherein the valve body has a passage, wherein when the valve body rotates, a flow path is switchable by changing a combination of the plurality of ports to be connected, and wherein an engaging device is provided at a predetermined position between an outer peripheral portion of the valve body and an inner peripheral portion of the housing for engagement therebetween. According to the features of the present invention, since it is possible to control the rotation of the valve body while the valve body is set to an initial position by using the engagement position of the engaging device provided at a radially outward position separated from the rotation shaft of the valve body as the initial position, the valve body can be accurately disposed at a desired rotation position.

It may be preferable that the engaging device is composed of an elastic portion provided in one of the valve body and the housing and a step portion provided in remaining one of the valve body and the housing and configured for engaging with the elastic portion. According to this preferable configuration, the elastic portion reliably engages with the step portion at the engagement position of the engaging device, and the elastic portion retracts against the biasing force of the elastic portion at the non-engagement position of the engaging device, thereby preventing the hindrance in the rotation of the valve body.

It may be preferable that the elastic portion has an elastic member and a contact member biased by the elastic member and configured for engaging with the step portion. According to this preferable configuration, since the contact member can have rigidity, it is not necessary to design high rigidity of the elastic member.

It may be preferable that the contact member configured to engage with the step portion from a direction different from an opening direction of an opening in the passage. According to this preferable configuration, the contact member can be made less susceptible to the influence of the fluid flowing from the valve chamber into the passage.

It may be preferable that the passage is formed by vertically penetrating the valve body and the step portion is formed on an outer peripheral surface of the valve body. According to this preferable configuration, gravity is less likely to affect the engagement between the contact member and the valve body.

It may be preferable that the step portion is formed by notching an outer peripheral portion of the valve body. According to this preferable configuration, the structure of the switching valve can be made compact.

It may be preferable that the engaging device is a ratchet mechanism that is configured to allow the valve body to rotate in a first direction and restricts rotation in a second direction opposed to the first direction. According to this preferable configuration, since the engaging device engages at the engagement position during the rotation of the valve body toward the other side and the engaging device does not engage during the rotation of the valve body toward one side, it is easy to perform control of setting the valve body to the initial position.

It may be preferable that the switching valve further includes a motor configured to drive the valve body, and a detection unit configured to detect an engagement state of the engaging device in accordance with a current value of the motor. According to this preferable configuration, since it is possible to detect the engagement state of the engaging device by monitoring a current value to the motor, it is possible to simplify the structure of the switching valve.

### {BRIEF DESCRIPTION OF DRAWINGS}

FIG. 1 is a perspective view showing a switching valve according to a first embodiment of the present invention.
FIG. 2 is a cross-sectional view showing the switching valve according to the first embodiment.
FIG. 3 is a plan view of an upper cover in the first embodiment.
FIG. 4 is a plan view of a lower cover in the first embodiment.
FIG. 5 is a plan view showing a casing and a valve body in the first embodiment.
FIG. 6A is a schematic view showing an engagement state of a ratchet mechanism in the first embodiment and FIG. 6B is a schematic view showing a non-engagement state of the ratchet mechanism in the first embodiment.
FIG. 7 is a schematic cross-sectional view showing a structure of the ratchet mechanism in the first embodiment.
FIG. 8 is a cross-sectional view showing a switching valve according to a second embodiment of the present invention.

### {DESCRIPTION OF EMBODIMENTS}

Modes for carrying out a switching valve according to the present invention will be described on the basis of embodiments.

### {First embodiment}

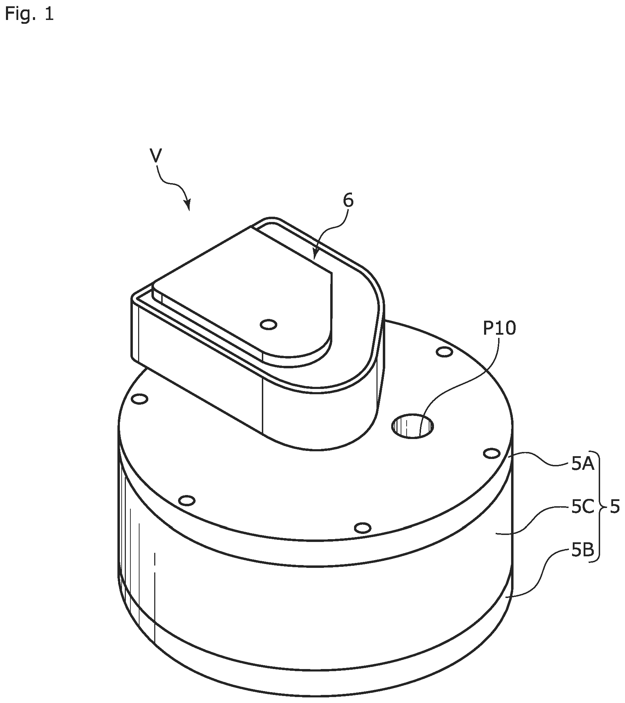

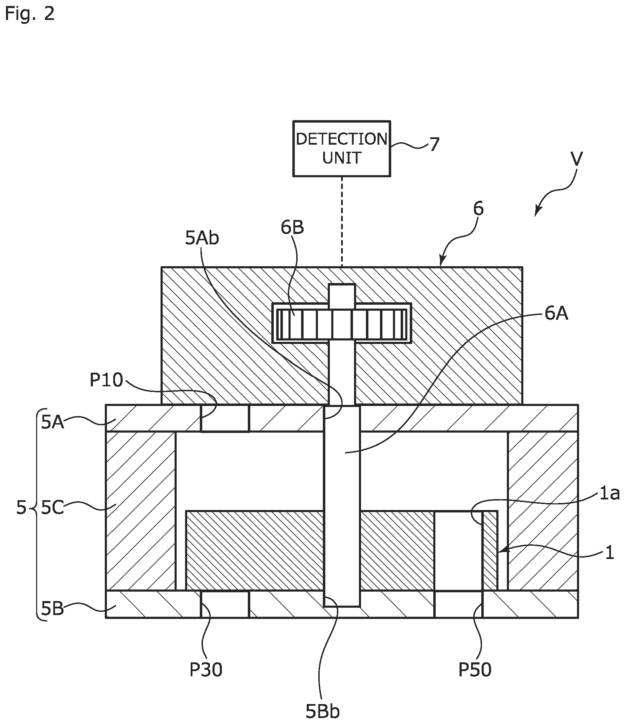

A switching valve according to a first embodiment will be described with reference to FIGS. 1 to 7. In the following description, the top and bottom of FIG. 2 will be referred to as the top and bottom of the switching valve. Specifically, the upper side of the paper on which a motor is disposed is the upper side of the switching valve, and the lower side of the paper as the opposite side thereof is the lower side of the switching valve.

A switching valve V of the present invention is used to select one of a plurality of modes of a fluid circuit and to switch a flow path through which a working fluid flows.

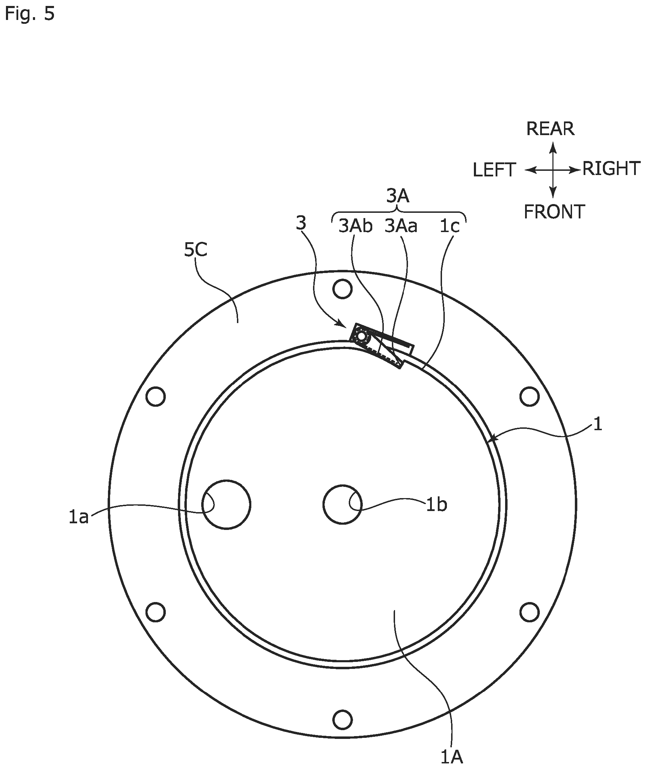

As shown in FIGS. 1 and 2, the switching valve V is mainly composed of a valve body 1, a housing 5, a drive unit 6, and a ratchet mechanism 3 (see FIG. 5) as an engaging device.

The housing 5 is composed of disk-shaped upper and lower covers 5A and 5B and a cylindrical casing 5C. The upper cover 5A, the lower cover 5B, and the casing 5C are made of a metal material or a resin material.

The upper cover 5A is fastened to the casing 5C with bolts (not shown) so as to close the upper opening of the casing 5C. The lower cover 5B is fastened to the casing 5C with bolts (not shown) so as to close the lower opening of the casing 5C.

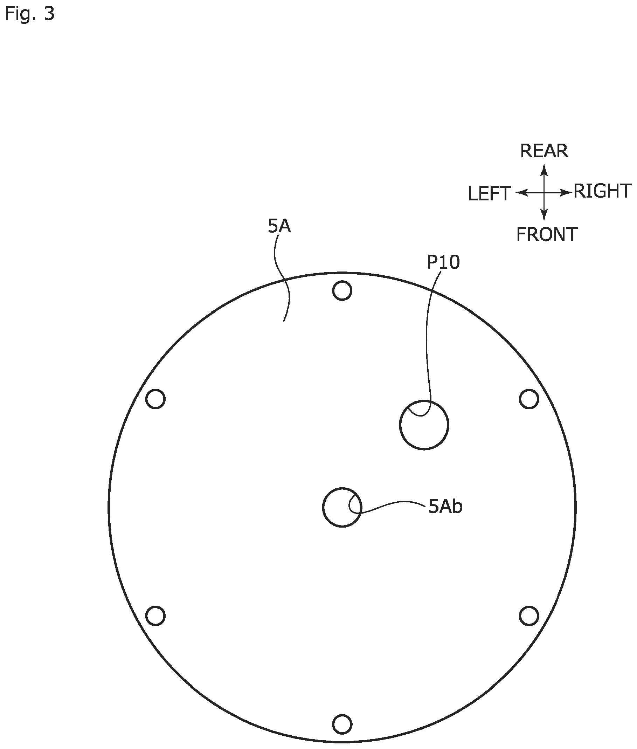

As shown in FIG. 3, the upper cover 5A is provided with a first port P10 that penetrates vertically. The first port P10 functions as an inlet port through which a working fluid discharged from an external fluid load (not shown) flows into the switching valve V.

Further, a through-hole portion 5Ab is provided at the center of the upper cover 5A, and a drive shaft 6A as a rotation shaft is inserted therethrough to be rotatable as will be described later (see FIG. 2).

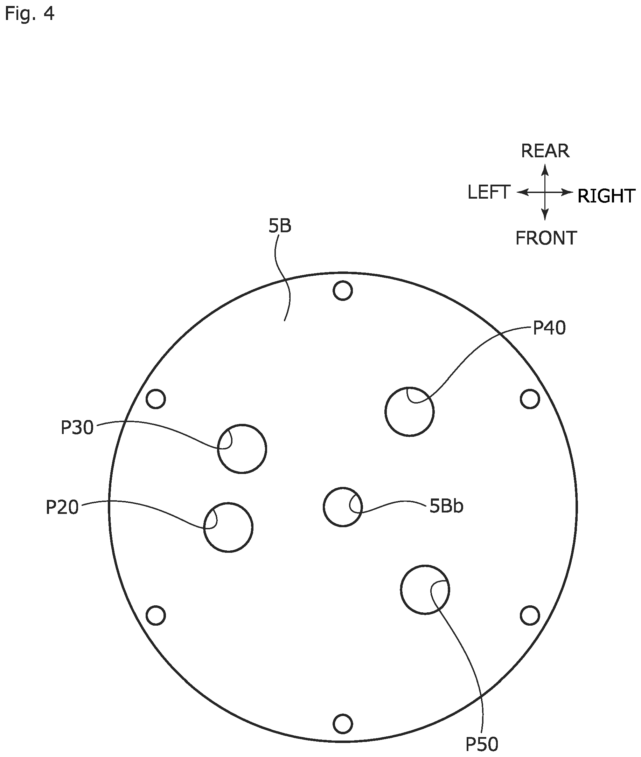

As shown in FIG. 4, the lower cover 5B is provided with a second port P20, a third port P30, a fourth port P40, and a fifth port P50 that penetrate vertically.

The second port P20 to the fifth port P50 are arranged at uneven intervals in the circumferential direction on a circle of the same radius from the center of the lower cover 5B. Specifically, the second port P20 is provided at approximately the 9 o'clock position of the lower cover 5B. The third port P30 is provided at a position shifted approximately 40 degrees clockwise from the second port P20. The fourth port P40 is provided at a position shifted approximately 95 degrees clockwise from the third port P30. The fifth port P50 is provided at a position shifted approximately 100 degrees clockwise from the fourth port P40.

The second port P20 to the fifth port P50 function as outlet ports from which a working fluid inside the switching valve V flows toward an external fluid load (not shown).

Further, a recess 5Bb which opens upward is provided at the center of the lower cover 5B, and the lower end of the drive shaft 6A is rotatably inserted thereinto (see FIG. 2).

Next, the valve body 1 will be described with reference to FIG. 5.

The valve body 1 is formed in a disk shape. The valve body 1 is provided with a through-hole 1a and an insertion hole 1b as passages.

The insertion hole 1b penetrates the center portion of the valve body 1, and the drive shaft 6A is press-inserted thereinto. Accordingly, the valve body 1 is rotatable together with the drive shaft 6A.

The through-hole 1a can communicate with any one of the second port P20 to the fifth port P50 selectively by changing the rotation position of the valve body 1.

Further, an outer peripheral portion 1A of the valve body 1 is provided with a step portion 3A that forms a part of the ratchet mechanism 3 to be described later. This step portion 3A is composed of an outer peripheral surface 1c of the valve body 1, an end surface 3Aa extending inward from the counterclockwise end of the outer peripheral surface 1c when viewed from above, and an inclined surface 3Ab extending radially outward from the radially inner end of the end surface 3Aa in a counterclockwise direction when viewed from above and continuing to the outer peripheral surface 1c.

Returning to FIG. 2, the drive unit 6 is mainly composed of a drive shaft 6A and a drive device 6B.

The drive device 6B is a device that transmits an external driving force to the outer peripheral surface of the upper end of the drive shaft 6A. For example, the drive unit 6B of this embodiment includes a stepping motor, a gear box, and a rotary encoder, and is capable of rotating the valve body 1 to any rotation position around the drive shaft 6A. A detection unit 7 that detects a current value to the stepping motor is connected to the drive device 6B.

The switching valve V of this first embodiment can change a communication destination to which a working fluid flows from the first port P10 by changing the rotation position of the valve body 1 and appropriately selecting the second port P20 to the fifth port P50 communicating with the through-hole 1a.

Next, the ratchet mechanism 3 will be described with reference to FIGS. 5 to 7.

The ratchet mechanism 3 is mainly composed of a step portion 3A, a hinge piece 3B as a contact member, and a torsion spring 3C as an elastic member.

As described above, the step portion 3A is formed by notching a part of the outer peripheral portion 1A of the valve body 1.

The hinge piece 3B is made of resin, metal, or the like, and is attached to be swingable about a fixed shaft 5Cb extending vertically and provided in a groove portion 5Ca in an inner peripheral portion 5CA of the casing 5C.

The torsion spring 3C has a torsion portion 3Ca externally inserted into the fixed shaft 5Cb, one arm 3Cb contacting a peripheral side wall 5Cc forming the groove portion 5Ca, and the other arm 3Cc fixed to the hinge piece 3B. Accordingly, the end of the hinge piece 3B opposite to the fixed shaft 5Cb is biased radially inward.

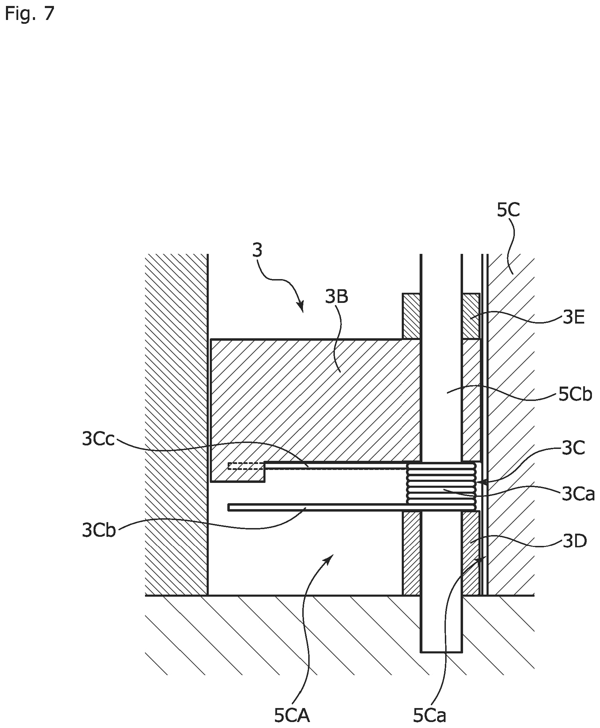

Referring to FIG. 7, since the hinge piece 3B is disposed above the torsion spring 3C and the torsion spring 3C is pressed by the load of the hinge piece 3B, the vertical deformation of the torsion spring 3C can be suppressed.

Further, washers 3D and 3E are disposed below the torsion spring 3C and above the hinge piece 3B on the fixed shaft 5Cb, respectively, to restrict the vertical movement of the hinge piece 3B and the torsion spring 3C. Furthermore, the material of the washers 3D and 3E is not particularly limited, but by using a low-friction material such as fluororesin, the rotation of the hinge piece 3B and the torsion spring 3C is less likely to be hindered.

As shown in FIG. 5, the hinge piece 3B and the torsion spring 3C are provided at a position slightly closer to the 1 o'clock side than the 12 o'clock position when viewed from above on the inner peripheral portion 5CA of the casing 5C.

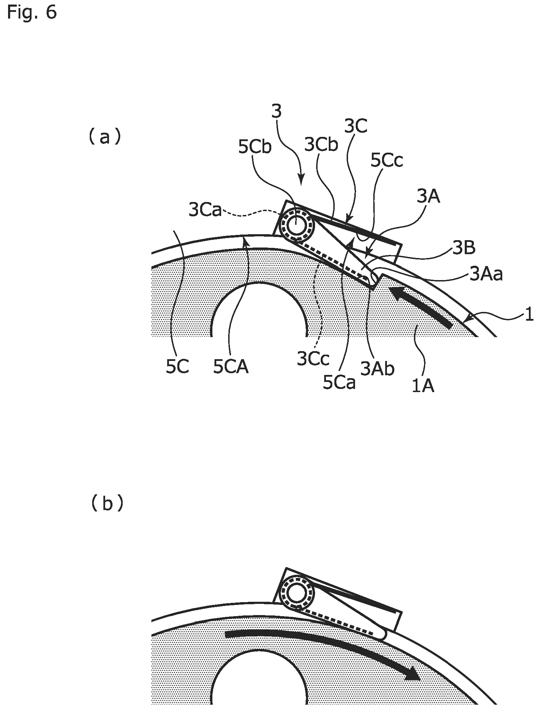

Referring to FIG. 6A, the hinge piece 3B and the torsion spring 3C are capable of engaging with the end surface 3Aa of the step portion 3A of the valve body 1, which rotates counterclockwise when viewed from above, and are adapted to restrict further counterclockwise rotation of the valve body 1.

Further, referring to FIG. 6B, the hinge piece 3B and the torsion spring 3C are adapted to allow the valve body 1 to rotate clockwise when viewed from above. Since the step portion 3A has the inclined surface 3Ab, the hinge piece 3B can be smoothly removed from the step portion 3A (see FIG. 6A).

In such a switching valve V, the valve body 1 often deviates from the desired rotation position due to external factors such as vibration. In the switching valve V of this embodiment, for example, control is performed to set the valve body 1 to its initial position at predetermined time intervals.

When the valve body 1 is set to the initial position using the ratchet mechanism 3 from a state where the hinge piece 3B does not engage with the step portion 3A and the valve body 1 is at an arbitrary rotation position (for example, the state of FIG. 6B), as shown in FIG. 6A, the valve body 1 is rotated clockwise (that is, rotated to the other side) when viewed from below until the hinge piece 3B engages with the step portion 3A. When the hinge piece 3B engages with the step portion 3A, the detection unit 7 that detects a current value of the stepping motor of the drive device 6B detects a current value that exceeds a predetermined threshold value. Accordingly, the stepping motor of the drive device 6B is stopped, and the valve body 1 is set to the initial position.

In this way, since the valve body 1 can be set to the initial position and the valve body 1 can be appropriately controlled to rotate to an arbitrary rotation position from a state in which the valve body 1 is set to the initial position, the valve body 1 can be accurately disposed at a desired rotation position.

Further, since the engagement position of the ratchet mechanism 3 provided in the outer peripheral portion 1A of the valve body 1 separated radially outward from the drive shaft 6A, that is, the engagement position between the hinge piece 3B and the step portion 3A is used as the initial position, the valve body 1 can be accurately set to the initial position.

Further, since the rotation of the valve body 1 is mechanically restricted by the ratchet mechanism 3, the valve body 1 can be accurately disposed at the initial position.

Furthermore, since it is possible to detect the engagement state between the hinge piece 3B and the step portion 3A by monitoring a current value to the stepping motor of the drive device 6B using the detection unit 7, it is possible to simplify the structure of the switching valve V without using a highly functional sensor or the like.

Further, since the hinge piece 3B reliably engages with the step portion 3A by the torsion spring 3C at the engagement position of the ratchet mechanism 3 and the hinge piece 3B retracts from the step portion 3A against the biasing force of the torsion spring 3C at the non-engagement position of the ratchet mechanism 3, it is possible to prevent the hindrance in the rotation of the valve body 1. In addition, since a biasing force from the torsion spring 3C normally acts on the outer peripheral surface 1c of the valve body 1, the operation of the valve body 1 is stabilized.

Further, the elastic portion which can engage with the step portion 3A is composed of the torsion spring 3C and the hinge piece 3B. Accordingly, since the hinge piece 3B has rigidity, it is not necessary to design high rigidity of the torsion spring 3C.

Further, since the hinge piece 3B is adapted to engage with the step portion 3A in a radial direction which is a direction different from the axial direction as the formation direction of the through-hole 1a, it is possible to reduce the influence on the engagement state between the hinge piece 3B and the step portion 3A by the fluid pressure of the working fluid flowing through the through-hole 1a provided in the axial direction. Further, since the load of the valve body 1 does not affect the hinge piece 3B and similarly the load of the hinge piece 3B does not affect the valve body 1, it is possible to reduce the influence of gravity on the engagement state between the hinge piece 3B and the step portion 3A.

Further, since the step portion 3A is formed by notching the outer peripheral portion 1A of the valve body 1, the structure of the switching valve V can be made compact compared to the case where the step portion 3A is provided to protrude radially outward from the outer peripheral surface of the valve body 1.

Further, since the ratchet mechanism 3 allows the rotation of the valve body 1 toward one side and restricts the rotation thereof toward the other side, the hinge piece 3B engages with the step portion 3A at the engagement position when the valve body 1 rotates toward the other side and the hinge piece 3B does not engage with the step portion 3A when the valve body 1 rotates toward one side. Therefore, it is easy to perform control of setting the valve body 1 to the initial position.

In particular, since the valve body 1 can rotate 360 degrees toward one side and is restricted only at one point in the circumferential direction when rotating toward the other side, the valve body 1 has a high degree of rotational freedom, which is useful in a mode such as this first embodiment in which the through-hole 1a of the valve body 1 is connected to the second port P20 to the fifth port P50 that are unevenly arranged in the lower cover 5B.

Further, in this embodiment, an example in which one disk is provided as the valve body has been described, but the present invention can also be applied to the case in which a plurality of disks are provided in the configuration in which one ratchet mechanism is provided in the disk directly connected to the drive device. For example, when two disks are provided and are respectively connected to the drive devices, the ratchet mechanism may be provided for each of them.

### {Second embodiment}

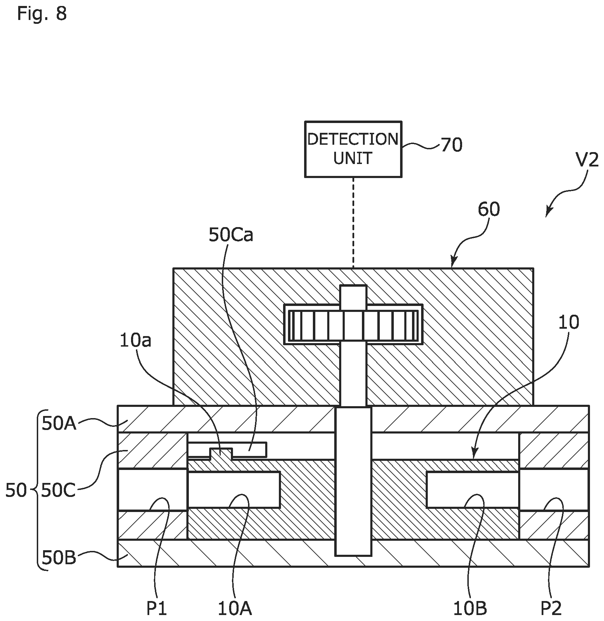

Next, a switching valve according to a second embodiment will be described with reference to FIG. 8. Furthermore, the description of the same configuration as in the first embodiment will be omitted.

As shown in FIG. 8, in a switching valve V2, a plurality of inlet and outlet ports P1 and P2 are provided in a casing 50C of a housing 50 (only one of each port shown). An upper cover 50A and a lower cover 50B are not provided with the ports.

The valve body 10 is provided with communication passages 10A and 10B (only a part of each communication passage is shown) that connect desired inlet and outlet ports P1 and P2. By rotating the valve body 10, the combination of the inlet port P1 and the outlet port P2 that communicate with the communication passages 10A and 10B can be changed.

The upper surface of the valve body 10 is provided with a protruding piece 10a which protrudes upward. Further, the inner peripheral surface of the casing 50C is provided with a protruding piece 50Ca which protrudes radially inward. The protruding piece 10a is adapted to contact the protruding piece 50Ca by the rotation of the valve body 10. The protruding piece 10a and the protruding piece 50Ca function as the engaging device.

The valve body 10 is rotated clockwise or counterclockwise from an arbitrary rotation position until the protruding piece 10a engages with the protruding piece 50Ca. When the protruding piece 10a and the protruding piece 50Ca engage with each other, the detection unit 70 for detecting a current value of the stepping motor of the drive device 60 detects a current value exceeding a predetermined threshold value. Accordingly, the stepping motor of the drive device 60 is stopped, and the valve body 10 is set to the initial position.

Although the embodiments of the present invention have been described above with reference to the drawings, the specific configuration is not limited to these embodiments, and the present invention also includes modifications and additions that do not deviate from the scope of the present invention.

For example, in the above-described first embodiment, the engaging device is described as a ratchet mechanism, but the engaging device is not limited to the ratchet mechanism and can be freely changed as long as the engaging device engages between the housing and the outer peripheral portion of the valve body at the initial position of the valve body. For example, the contact member may be a ball, the elastic member may be a coil spring, and the step portion may be a recess provided on the valve body.

Further, in the above-described first embodiment, since the engaging device engages between the outer peripheral surface of the valve body and the inner peripheral surface of the housing, it is advantageous in that the axial and radial dimensions of the switching valve can be made compact. However, the engaging device does not necessarily have to engage between the outer peripheral surface of the valve body and the inner peripheral surface of the housing. For example, the contact member provided on the inner peripheral portion of the housing may engage with the step portion provided on the upper surface of the valve body on the radially outer side of the passage.

Further, in the above-described first embodiment, a mode using a torsion spring as the elastic member has been illustrated, but the elastic member may be changed to a leaf spring or the like. Further, if the elastic member has rigidity, the configuration of the contact member may be omitted and only the elastic member may engage with the valve body. In other words, the elastic member may also serve as the contact member.

Further, in the above-described first embodiment, a mode using a hinge piece as the contact member has been illustrated, but the present invention is not limited thereto. For example, an elastic member or the like provided on the inner peripheral portion of the housing may be used to be crushed when one side of the valve body rotates and elastically returns to its original shape when the other side of the valve body rotates to engage with the step portion of the valve body.

Further, the shape of the step portion is not limited to that of the first embodiment, and may be any shape that allows the contact member to engage when the valve body rotates to the other side. Further, a plurality of step portions may be provided in the circumferential direction of the outer peripheral portion of the valve body.

Further, in the above-described first embodiment, a mode having the hinge piece and the torsion spring provided on the housing side and the step portion provided on the valve body side has been illustrated, but the contact member and the elastic member may be provided in the valve body and the step portion may be provided on the housing side.

Further, in the above-described first embodiment, a mode having one inlet port and four outlet ports has been illustrated, but the number of inlet ports and outlet ports can be freely changed as long as one is at least one and the other is at least two. Further, the number of inlet ports and outlet ports is not limited to be different, and may be the same.

The valve body is not limited to a disk shape, but can be freely changed to a fan shape, an arc shape, a C-shape, or the like. Further, the valve body may not be provided with the passage.

### {REFERENCE SIGNS LIST}

- 1: Valve body
- 1A: Outer peripheral portion
- 1a: Through-hole (passage)
- 3: Ratchet mechanism (engaging device)
- 3A: Step portion
- 3B: Hinge piece (contact member, elastic portion)
- 3C: Torsion spring (elastic member, elastic portion)
- 5: Housing
- 5CA: Inner peripheral portion
- 6: Drive unit
- 6A: Drive shaft (rotation shaft)
- 6B: Drive device (motor)
- 7: Detection unit
- V: Switching valve

## Claims

1. A switching valve comprising:
a housing;
a valve body which is formed in a disk shape, which is disposed in a valve chamber formed inside the housing and which is configured to rotate relative to the housing; and
a drive device connected to the valve body and configured to rotate the valve body,
wherein the housing is provided with a plurality of ports that communicate with the valve chamber so that a fluid flow thereinto and therefrom,
wherein the valve body has a passage,
wherein when the valve body rotates, a flow path is switchable by changing a combination of the plurality of ports to be connected, and
wherein an engaging device is provided at a predetermined position between an outer peripheral portion of the valve body and an inner peripheral portion of the housing for engagement therebetween.

2. The switching valve according to claim 1,
wherein the engaging device is composed of an elastic portion provided in one of the valve body and the housing and a step portion provided in remaining one of the valve body and the housing and configured for engaging with the elastic portion.

3. The switching valve according to claim 2,
wherein the elastic portion has an elastic member and a contact member biased by the elastic member and configured for engaging with the step portion.

4. The switching valve according to claim 3,
wherein the contact member configured to engage with the step portion from a direction different from an opening direction of an opening in the passage.

5. The switching valve according to claim 4,
wherein the passage is formed by vertically penetrating the valve body and the step portion is formed on an outer peripheral surface of the valve body.

6. The switching valve according to claim 5,
wherein the step portion is formed by notching an outer peripheral portion of the valve body.

7. The switching valve according to any one of claims 2 to 6,
wherein the engaging device is a ratchet mechanism that is configured to allow the valve body to rotate in a first direction and restricts rotation in a second direction opposed to the first direction.

8. The switching valve according to claim 1, further comprising:
a motor configured to drive the valve body; and
a detection unit configured to detect an engagement state of the engaging device in accordance with a current value of the motor.
